(19) **Europäisches Patentamt European Patent Office Office européen des brevets**

(11) **EP 3 097 307 B1**

(12) **EUROPEAN PATENT SPECIFICATION**

(45) Date of publication and mention
of the grant of the patent:
**21.02.2018 Bulletin 2018/08**

(21) Application number: **14809529.2**

(22) Date of filing: **03.10.2014**

(51) Int Cl.:
***F03D 3/06*** (2006.01)

(86) International application number:
**PCT/IT2014/000261**

(87) International publication number:
**WO 2015/049710 (09.04.2015 Gazette 2015/14)**

(54) **MULTI-BLADE VERTICAL-AXIS WIND TURBINE WITH CONTINUOUS OR TRUNCATED WINGS**

WINDENERGIEANLAGE MIT MEHREREN SCHAUFELN UND VERTIKALER ACHSE UND KONTINUIERLICHEN ODER TRUNKIERTEN FLÜGELN

ÉOLIENNE À AXE VERTICAL À PALES MULTIPLES COMPRENANT DES AILES CONTINUES OU TRONQUÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2013 IT LT20130006**
**04.10.2013 IT LT20130007**

(43) Date of publication of application:
**30.11.2016 Bulletin 2016/48**

(73) Proprietor: **Velica Marchetti Wind Flow-er Generators Srls**
**04100 Latina (LT) (IT)**

(72) Inventor: **MARCHETTI, Omero**
**04100 Latina (LT) (IT)**

(74) Representative: **Fezzardi, Antonio et al**
**Studio Ferrario Srl**
**Via Collina, 36**
**00187 Roma (IT)**

(56) References cited:
**US-A1- 2007 018 464     US-A1- 2007 258 806**
**US-A1- 2010 327 596     US-A1- 2011 006 543**

**Description**

The present invention relates to the sector of generation of electrical energy exploiting the force of the wind. More specifically, it regards a vertical-axis wind turbine made up of sails with coaxial helical development, obtained by coupling a plurality of strips made of thin sheet metal with variable profile.

It should be noted, in addition to the technical aspects of construction, that the embodiment of the invention also finds application as element of urban decoration, with low environmental impact and with practically zero noise emissions.

One of the peculiar characteristics of the invention, as will be seen more clearly in what follows, is represented by its capacity for differential response and sensitivity to the wind force, obtained via a concave section having variable development, stabilized in shape and hence without the aid of stiffening sections, with consequent lowering of the cut-in value, increase of the working capacity, and practically zero acoustic pollution.

It should also be noted that the invention may be indifferently obtained in a right-hand version and a left-hand version for installation in series with a short distance between the turbines making up the wind farm. The dimensions of the wind turbine described basically depend upon the desired power. The wind turbine may basically be obtained in a version with two blades, three blades, or four blades, the apex of which may have a continuous profile or a truncated profile, as will be analysed in depth in what follows.

Currently, generation of electrical energy from a wind source is obtained, in the case of high powers, with horizontal-axis large-rotor generators, which are installed in large aggregated systems in so-called wind farms or wind parks having a high environmental impact, with problems of acoustic pollution and entailing an extremely high economic commitment. For low powers, systems are used with mini-rotors once again with horizontal axis or alternatively with vertical-axis generators according to two basic models: the Darrieus generator and the Savonius generator. These two models present different characterisations as regards particular details, according to the different manufacturers. The Savonius generator is virtually a coupling of a number of half-cylinders about an axis that intercepts the wind from various directions and drives an alternator, which produces electric current. In the last few years, some manufacturers have proceeded in the direction of an evolution of this generator by twisting a cylinder according to a helical development through 180° from the base to the top. The aforesaid generator, albeit responding to different directions of the wind, calls for considerable thicknesses of sheet metal and of horizontal stiffening structures, which are usually obtained with plates, ribbings, or tie-rods that constrain and stiffen the system, with consequent considerable increase in weight and a consequent increase in the speed of startup of the wind generator, which orients use thereof in areas with winds of considerable intensity, while inhibiting use thereof in urban contexts.

It is known, from US 2011/006543, a wind power generation unit formed by one vertical axis wind rotor and one or more power generation unit(s), in which the rotation shaft of the wind rotor is coupled with the rotor shaft of the single generator set through a connector, or the rotation shaft of the wind rotor is connected with the rotor shafts of multiple generator sets through the transmission mechanism. Said wind power generation unit proposes a helical vertical axis wind rotor and a lineal vertical axis wind rotor constructed by the drag type blade and the lift type blade, and proposes a helical wind rotor with pure drag type blade as well as the disassembling and splicing design of the above wind rotor.

A first purpose of the invention is to provide an apparatus that will make it possible to render an average family power requirement autonomous (the so-called "one man, one mill" concept) in order to produce, at a price that is accessible for everyone and that can be amortised in the short term, a power of 3-5 kW either in stand-alone conditions or to be exchanged *in situ* with the power grid.

A second purpose is to provide an apparatus that presents high reliability: elements with ascertained durability combined with techniques, drawn from the aeronautics sphere, that enable reaction with particular sensitivity to low wind speeds but that are also capable of responding, with equal implicit adaptability, to conditions of extreme mechanical stress in the presence of particularly violent winds.

A third purpose is to provide an object that will also be aesthetically attractive, in the sense that it will first be perceived as an attractive element of urban decoration and then as an, albeit refined, mechanical means.

This has been achieved, according to the invention, by providing an apparatus according to Claim 1, which is aimed at generation of electrical energy, by assembly of two, three, or four shaped wings, which turn about a vertical axis coupled to an alternator or magnet. More specifically, the invention is constituted by a shaft of different heights as a function of the desired power, preferably made of aluminium alloy or steel, to which two, three, or four volutes are welded, that develop on the basis of annuli satisfying the following mathematical formula

$$r = \left\{ \text{wing height} \times \left( \frac{\pi}{2} \right) \right\} + \text{shaft diameter}$$

which enables "winding" of the volutes along the shaft through a given number of degrees. Furthermore, the invention comprises two, three, or four wings with monocentric inner profile and polycentric outer profile, which are arranged from the base attachment to the top and are preferably made of a particular aluminium alloy or steel, according to the process described in what follows and illustrated in the attached drawings. Shaping of the strips, which, when assembled, constitute the wing is obtained according to the mathematical formula appearing above, and their coupling produces a stiffening thanks to the simple doubling of section oriented along the lines of stress and enables a reactivity to the different conditions of stress that is optimal from the standpoint of elasticity and strength, enabling an exceptional containment of the weights, which results in an effectiveness far greater than all the similar products currently available on the market or currently in use.

A better understanding of the invention will be obtained from the ensuing detailed description and with reference to the drawings, which illustrate, purely by way of non-limiting example, some preferred embodiments.

In the drawings:

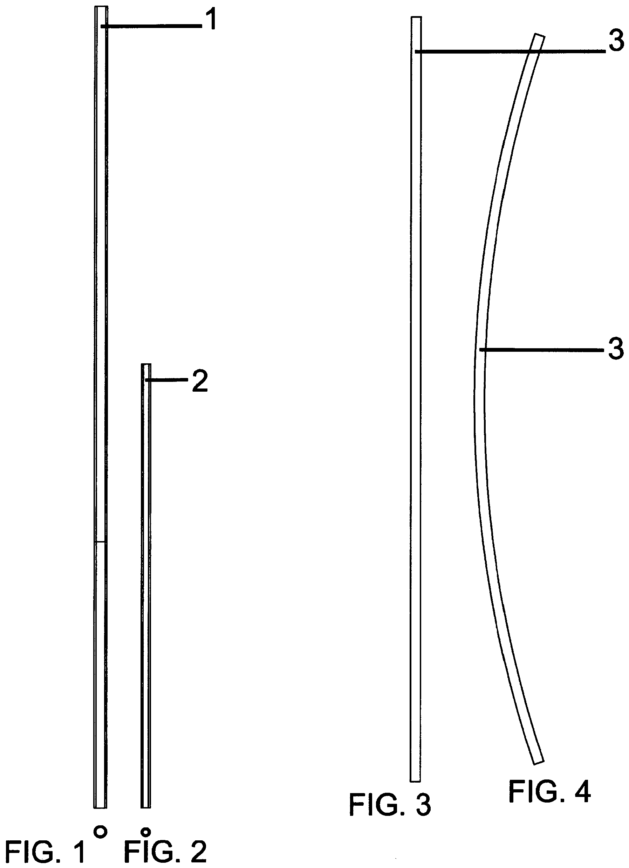

Figures 1 and 2 are a cross-sectional view of the cylindrical shaft and the reinforcing counter-shaft of a preferred embodiment;
Figures 3 and 4 show the stem of the wing, straight and curved, respectively;
Figures 5 and 5A show a wing with a continuous profile and one with a truncated profile, respectively;
Figures 6 and 7 are an axial cross-sectional view and a view in elevation of the invention in the two-wing version with continuous profile;
Figures 8 and 9 are cross-sectional views according to the horizontal planes of trace A-A and B-B indicated in Figure 7;
Figures 10 and 11 are cross-sectional views regarding two details of construction indicated in Figure 6;

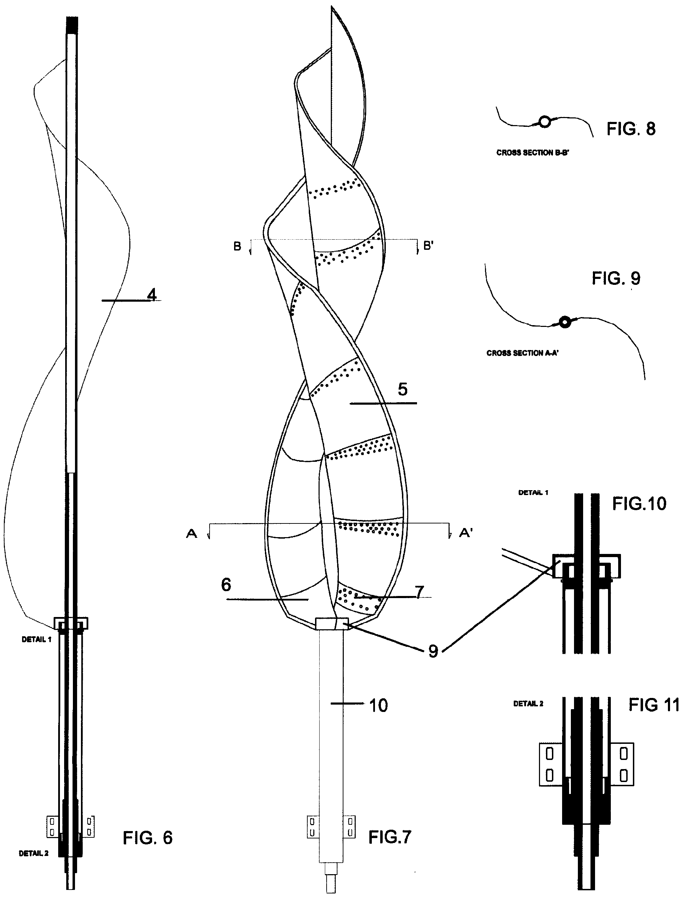

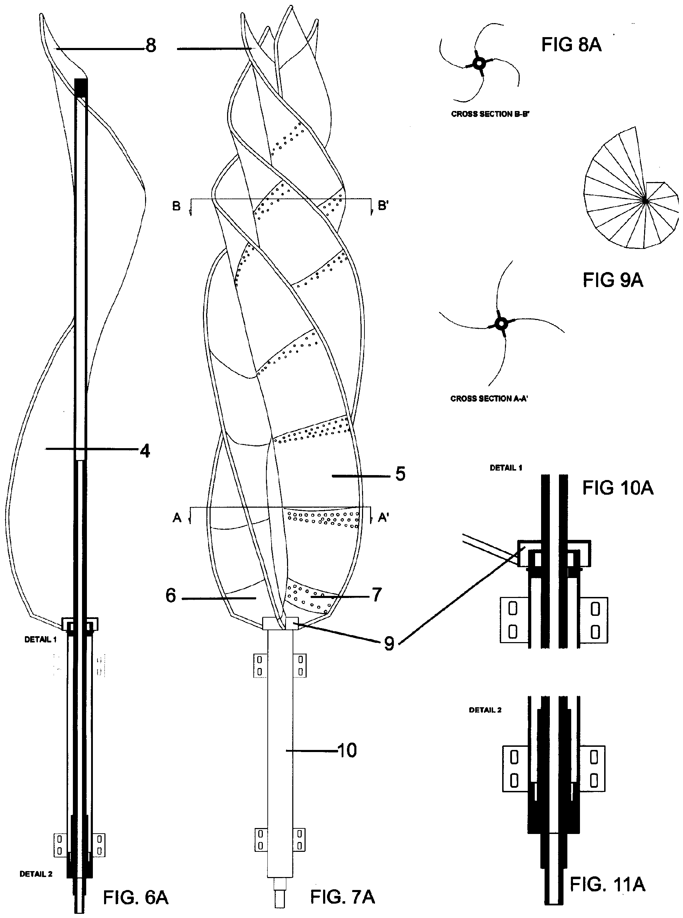

Figures 6A to 11A, which are similar to the preceding Figures 6-11, regard the present invention in the four-wing version with truncated profile;

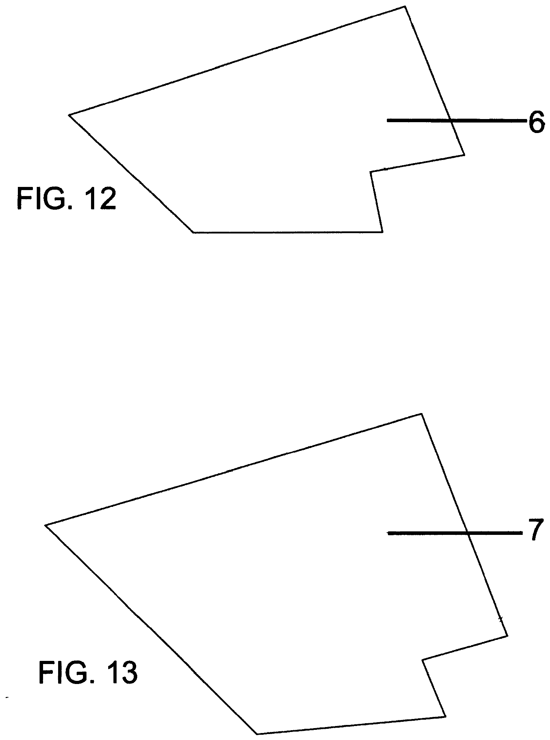

Figures 12 and 13 show the shape in plan view of reinforcing gussets of the bottom strip;

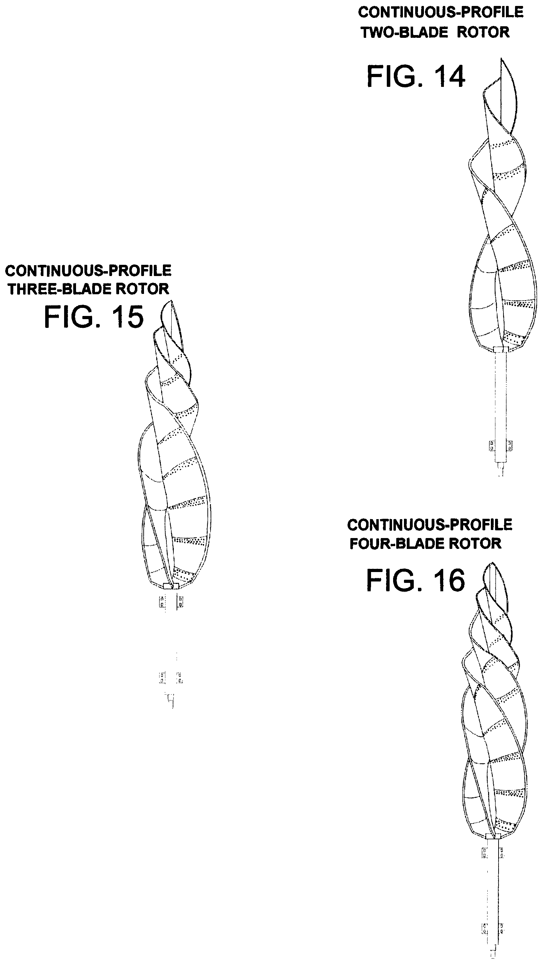

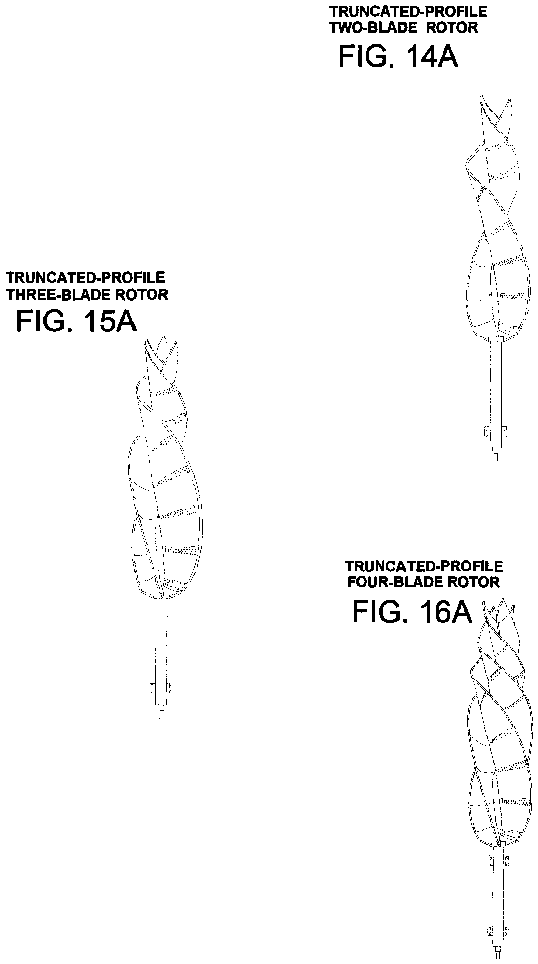

Figures 14, 15, and 16 show 3D views of the invention, respectively, in the two-wing, three-wing, and four-wing versions with continuous profile;
Figures 14A, 15A and 16A show 3D views of the invention, respectively, in the two-wing, three-wing, and four-wing versions with truncated profile;

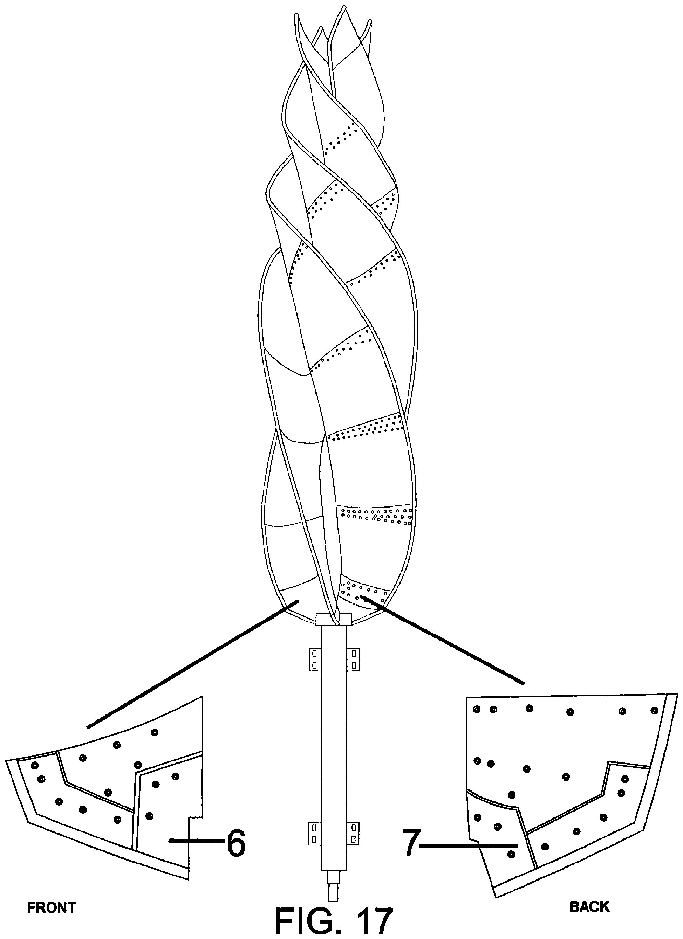

Figure 17 shows details of construction regarding the reinforcements at the bottom base of the wings; and

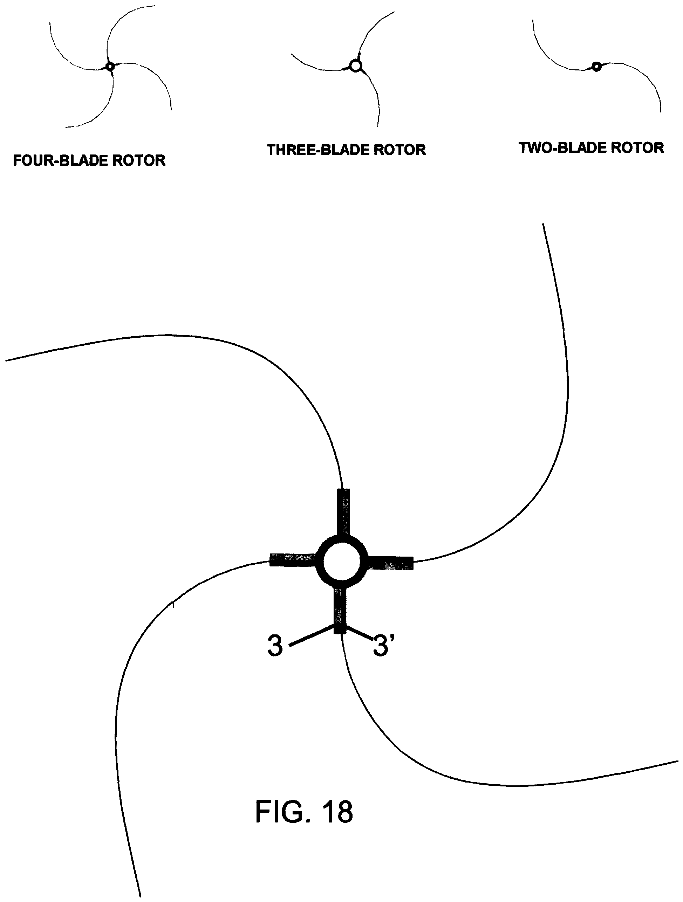

Figure 18 is an enlarged cross-sectional view regarding the four-wing version, highlighted in which are the stem and counter-stem that fix the wings to the shaft.

The wind turbine forming the subject of the present invention represents an evolution with respect to currently known apparatuses. The inventive idea underlying the invention is to associate to the advantages afforded by the use of the helix and of the volute the advantages afforded by the use of the sail, precisely the sail of pleasure watercraft, with its characteristics of ductility, flexibility, capacity of "spilling" (to adopt a term used by sailors) the excesses of the gusts of wind. Hybridisation of the helix of the volute with the sail (a concept that at first sight might appear frankly problematical) has been first simulated with a 3D model, subsequently refined by modelling in scale to verify the plausibility of the hypotheses underlying the design, and further developed by creating first experimental prototypes. The process of devising, designing, prior testing followed by in-field testing of the invention has led to a radical redefinition and optimisation of the fluid-dynamic processes regarding this type of generator. Creation of a radically innovative apparatus, or rather a completely new and altogether revolutionary apparatus, has become possible, based on mathematical rigour, allied to simplicity of construction, installation and operation, efficiency and effectiveness as compared to what has been devised or proposed up to now.

According to a peculiar characteristic of the invention, by rendering a stem of sheet metal fixed with respect to a volute fixed on an axis, it is advantageously possible to bestow on this stem a concave shape without installing tie-rods or stiffening ribs, i.e., reinforcement sections that stabilize the concavity thereof, which - for the purposes of the invention - constitutes one of the main aims, namely, that of presenting to the wind a profile that is as wide, light, and reactive as possible, on which the wind itself can apply its capacity of thrust to be converted into rotary motion, and hence into torque and work. By appropriately shaping the profile and the sequence of the various stems, as well as the joins of the strips according to precise axes of convergence in the plane and by rendering the various strips fixed with respect to the volute that turns through a given number of degrees on the load-bearing shaft, the concavity assumes characteristics of particular efficiency and presents further advantages that are instrumental for optimizing the invention. The stems or the strips are shaped so as to assume an inner profile, the profile to be coupled to the volute fixed with respect to the vertical shaft, that satisfies the mathematical formula already given previously, which enables coupling thereof to the volute, thus triggering torsion.

Accordingly, the outer profile of the aforesaid stems or strips is such as to guarantee a lowering of the centre of thrust of the wind, which means a saving in weight in the structural sizing, and at the same time a capacity for "spilling" the excesses of thrust in a progressive and optimal way, i.e., for opposing a progressively lower resistance in the case where the conditions of thrust become critical. The theoretical profile of the stems or the strips is increased along the sections of coupling so as to enable overlapping of the flaps, and their consequent assemblage with rivets. This assemblage, consolidated by gluing using special glues for aeronautics applications in effect stabilises the torsion triggered by coupling to the volute welded to the vertical shaft, in so far as, albeit for fractional values, the radii of curvature of the two overlapping metal sheets obviously differ by the thickness of the sheet and thus automatically render the active concavity permanent.

In the preferred embodiments described herein, the dual coupling obtained using rivets and glue constitutes, in itself, a doubling of the section (it should be noted that the metal sheets have a millimetric thickness) and assumes the function of stiffening ribs with ideal characteristics, in so far as they present flexibility, homogeneity of mechanical characteristics with the part carried, elasticity, and hence excellent capacity of response to the conditions of operation, which change altogether from one instant to the next on account of the wind that acts thereon. Furthermore, the convergence towards a precise geometrical point of the strips that are being traced makes it possible to ensure that the ribbing, owing to the doubling of section that is thus obtained, will be able to strengthen the surface that is created, along the precise lines of force exerted by the wind throughout the spilling phase, following, and identifying with isometric congruence, the pattern of the stresses induced in the system in all the conditions of operation of the system, in surprising analogy to the way in which the leaves of plants develop their ribbing, which is especially evident on the underside of the leaf and has the dual function of structural stiffening and conveying of the lymph that rises from the trunk and from the branches.

The turbine may be obtained with two, three, or four blades, and in different shapes, according to the amount of electrical energy that it is intended to produce, in two different assemblies, a right-hand one and a left-hand one. The turbine is built with different heights and hence with different surface developments, with consequent different sections both of the shaft and of the volute fixed with respect to the shaft for coupling of the stems or strips, different shaping of the strips themselves even though they are always the expression of the identical mathematical and physical principles that underlie the invention.

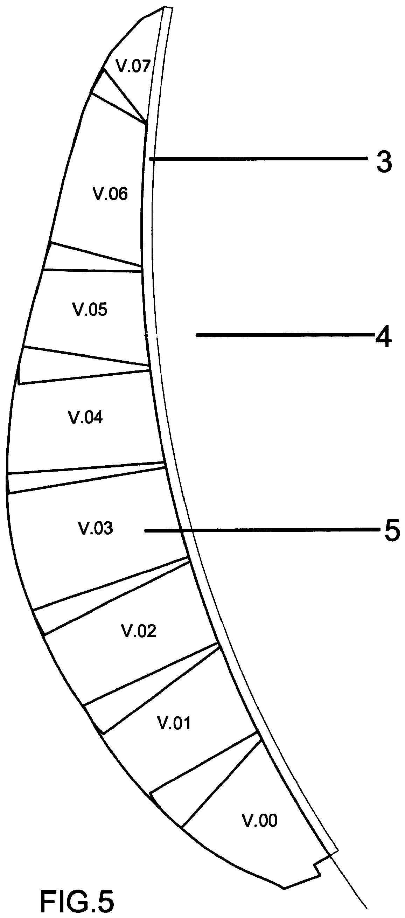

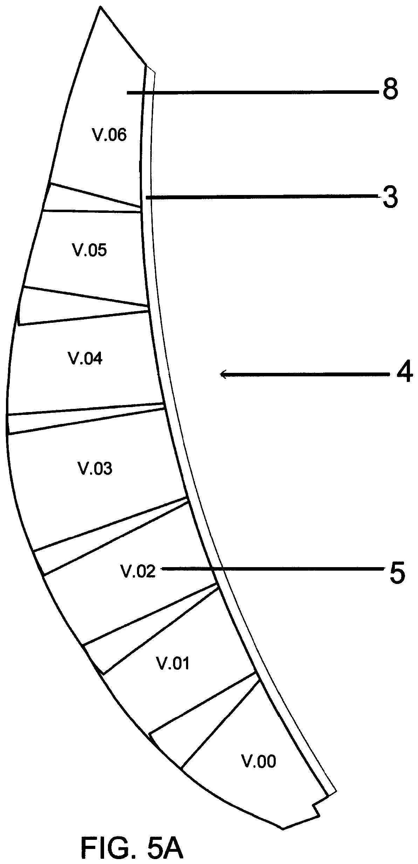

According to the needs, it is possible to obtain the closing part of the blade with the apex truncated (see, for example, Figures 5A and 14A-16A) or else in continuity with the outer curve of the blade itself (see, for example, Figures 5 and 14-16) in order to use, where no constraints of height exist, the maximum active section of the turbine according to the invention and consequently the maximum work yield. It is then produced with a right-hand direction of rotation or a left-hand direction of rotation to enable installation of batteries of generators in particular conditions. In the case where it should in fact be necessary to install a number of turbine rotors in series in restricted spaces, for example the flat roof of an apartment block where it is not possible to install them at a due distance to guarantee an undisturbed cone of wind, they can be mounted at an extremely short distance apart along the directrix orthogonal to the direction of maximum wind force detected on the site. In this way, by alternating the rotors, i.e., a right-hand rotor with a left-hand rotor, the wind that comes off one rotor is taken up by the next rotor (that is, it becomes effective for the neighbouring rotor), until a mechanism of mutual sequential excitation is triggered, so that once any one of the series has started, this automatically sets the neighbouring rotors in rotation, and the latter in turn set the subsequent rotors in rotation, activating a sort of alternating synchronism of rotation of the entire battery of generators.

The distance between the wind turbines must be calculated according to the wind conditions that are dominant where the system is installed.

Finally, with reference to the preferred embodiments that have so far been described herein by way of example, it should be noted that provided at the bottom attachment of the wing 4 is a protective cap 9 for a casing 10 of the turbine where bearings are located, on which the shaft 1 can turn.

**Claims**

1. A vertical-axis wind turbine with a cylindrical shaft (1), **characterized by** a stem (3) wound around said shaft (1), a plurality of trapezoidal strips (5) joined together to form two, three, or four wings (4), a counter-stem (3') for final anchorage of the strips (5), and further welded on the outside of said shaft (1), for each wing (4), is a stem (3) wound in a helix around the shaft (1) at an angle equal to or greater than 270° developing uniformly throughout the length of the wing itself, wherein each wing (4) is made up of aligned strips (5), which overlap one another converging on a single centre so as to constitute a structural arm and in that they are aligned to form two profiles, an inner profile and an outer profile, which determine the shape of the turbine and of its wings (4), which are respectively bonded to the shaft with application of a counter-stem (3'), riveted and welded throughout the development of each wing; wherein the aforesaid trapezoidal strips (5) that make up the wing are set alongside one another and assembled together along overlapping edge flaps that converge on a single centre on the shaft (1) so as to constitute structural reinforcement arms and further have an inner profile that reproduces the curvature of the stem that is awaiting engagement of the strips and an uneven and eccentric outer profile so as to lower the centroid of the wing by widening the bottom part in order to improve response to wind and stresses.

2. The vertical-axis wind turbine according to Claim 1, **characterized in that** said cylindrical shaft (1) is tubular and is provided with a reinforcing counter-shaft (2) slid into it for reinforcing its bottom part, and **in that** the stems (3) welded in a helix along the outer perimeter of the shaft (1), throughout the length of the wing (4), function as structural reinforcement for the top part and as support for the strips (5) that make up the wing itself (4).

3. The vertical-axis wind turbine according to any one of the preceding claims, **characterized in that** each stem (3) is made of the same material as the shaft and is curved according to the arc of a circle deriving from the radius resulting from the following formula:

$$r = \left\{ \text{wing height} \times \left( \frac{\pi}{2} \right) \right\} + \text{shaft diameter}$$

moreover, the stem is wound around the shaft (1) at an angle greater than 270° developing throughout the height of the wing and is welded to the shaft, waiting for engagement of the strips (5) that make up the wing (4) itself.

4. The vertical-axis wind turbine according to any one of the preceding claims, **characterized in that** the trapezoidal strips (5) that make up each wing (4) are set alongside one another and assembled via riveting.

5. The vertical-axis wind turbine according to any one of the preceding claims, **characterized in that** the counter-stem (3') designed in conformance with the stem (3) is bolted, welded, and finally riveted to ensure a final firm anchorage of the wings (4) to the shaft (1).

6. The vertical-axis wind turbine according to any one of the preceding claims, **characterized in that** it further comprises front gussets (6) and rear gussets (7) of different extension, provided on the bottom strip, which strengthen it at the attachment of the wing (4) to a cap (9) for protecting a casing (10) of the turbine.

7. The vertical-axis wind turbine according to any one of the preceding claims, **characterized in that** the wings (4), viewed in cross section, have a spiraloid and progressive curve, which, associated to the helical torsion in proportion to the height of the shaft (1), creates a rising channel delimited by the wings themselves that winds around the shaft with a progressive narrowing that starts from the base, where the channel is wider, and reaches the top, where the channel is narrower.

8. The vertical-axis wind turbine according to Claim 7, **characterized in that** the curvature presented by each horizontal section of the wings (4) increases as the position in height of the section itself increases.

9. The vertical-axis wind turbine according to any one of the preceding claims, **characterized in that** the top of each wing (4) has a truncated profile (8), i.e., not radiused to the axis of the shaft (1).

10. The vertical-axis wind turbine according to any one of Claims 1 to 8, **characterized in that** the top of each wing (4) has a continuous profile, i.e., one radiused to the axis of the shaft (1).

**Patentansprüche**

1. Vertikalachsige Windturbine mit einer zylindrischen Welle (1), **gekennzeichnet durch** eine Stange (3), die um die Welle (1) gewunden ist, eine Vielzahl trapezförmiger Streifen (5), die miteinander verbunden sind, um zwei, drei oder vier Flügel (4) zu bilden, eine Gegenstange (3') zur abschließenden Verankerung der Streifen (5), und des Weiteren an der Außenseite der Welle (1) - für jeden Flügel (4) - eine Stange (3) angeschweißt ist, die um die Welle (1) in einem Winkel gleich oder größer als 270°, über die Länge des Flügels selbst gleichmäßig ausgebildet, spiralförmig gewunden ist, wobei jeder Flügel (4) aus fluchtenden Streifen (5) besteht, die sich an einem einzelnen Mittelpunkt zusammenlaufend überlappen, um einen strukturellen Steg zu bilden, und **dadurch, dass** sie zur Bildung zweier Profile, einem Innenprofil und einem Außenprofil, ausgerichtet sind, welche die Form der Turbine und ihrer Flügel (4) bestimmen, die jeweils mit der Welle bei Anwendung einer Gegenstange (3'), genietet und geschweißt durchweg in der Entfaltung jedes Flügels, verbunden sind; wobei die oben erwähnten trapezförmigen Streifen (5), die den Flügel bilden, nebeneinander angeordnet sind und längs überlappender Kantenklappen, die in einem einzelnen Mittelpunkt auf der Welle (1) zusammenlaufen, zusammengesetzt sind, um strukturelle Verstärkungsstege zu bilden, und außerdem ein Innenprofil, das die Wölbung der Stange, das heißt einen anstehenden Eingriff der Streifen wiedergibt, und ein ungleichmäßiges und exzentrisches Außenprofil aufweisen, so dass der Massenmittelpunkt des Flügels durch Verbreiterung des unteren Teils tiefergelegt wird, um das Ansprechen auf Wind und Beanspruchungen zu verbessern.

**2.** Vertikalachsige Windturbine nach Anspruch 1, **dadurch gekennzeichnet, dass** die zylindrische Welle (1) rohrförmig ist und mit einer in sie eingeschobenen, verstärkenden Gegenwelle (2) zur Verstärkung ihres unteren Teils versehen ist, und dadurch, dass die längs des äußeren Umfangs der Welle (1) spiralförmig über die gesamte Länge des Flügels (4) geschweißten Stangen (3) als strukturelle Verstärkung für den oberen Teil und als Unterstützung für die Streifen (5), die den Flügel (4) selbst bilden, wirken.

**3.** Vertikalachsige Windturbine nach einem der vorhergehenden Ansprüche, **dadurch gekennzeichnet, dass** jede Stange (3) aus dem gleichen Werkstoff wie die Welle besteht und entsprechend dem Bogen eines Kreises gekrümmt ist, der sich aus dem von der folgenden Formel resultierenden Radius ableitet:

$$r = \left\{ Fl\ddot{u}gelh\ddot{o}he \times \left( \frac{\pi}{2} \right) \right\} + Wellendurchmesser$$

die Stange außerdem um die Welle (1) in einem Winkel größer als 270° gewunden ist, sich über die ganze Höhe des Flügels ausbildet und an der Welle angeschweißt ist, indem ein Eingriff der Streifen (5), die den Flügel (4) selbst bilden, ansteht.

**4.** Vertikalachsige Windturbine nach einem der vorhergehenden Ansprüche, **dadurch gekennzeichnet, dass** die trapezförmigen Streifen (5), die jeden Flügel (4) bilden, nebeneinander angeordnet sind und durch Nietung zusammengesetzt werden.

**5.** Vertikalachsige Windturbine nach einem der vorhergehenden Ansprüche, **dadurch gekennzeichnet, dass** die in Übereinstimmung mit der Stange (3) gestaltete Gegenstange (3') verschraubt, verschweißt und schließlich vernietet wird, um eine abschließende Verankerung der Flügel (4) an der Welle (1) zu gewährleisten.

**6.** Vertikalachsige Windturbine nach einem der vorhergehenden Ansprüche, **dadurch gekennzeichnet, dass** sie des Weiteren vordere Eckversteifungen (6) und hintere Eckversteifungen (7) unterschiedlicher Ausdehnung umfasst, die auf dem unteren Streifen vorgesehen sind, die ihn an der Befestigung des Flügels (4) mit einer Abdeckung (9) zum Schutz eines Gehäuses (10) der Turbine verstärken.

**7.** Vertikalachsige Windturbine nach einem der vorhergehenden Ansprüche, **dadurch gekennzeichnet, dass** die Flügel (4) bei Betrachtung im Querschnitt eine spiralförmige und progressive Kurve aufweisen, die mit der schraubenförmigen Verdrehung im Verhältnis zur Höhe der Welle (1) einen durch die Flügel selbst begrenzten, ansteigenden Kanal erzeugt, der sich um die Welle herum windet mit einer fortschreitenden Einschnürung, die von der Basis beginnt, wo der Kanal weiter ist, und die Oberseite erreicht, wo der Kanal enger ist.

**8.** Vertikalachsige Windturbine nach Anspruch 7, **dadurch gekennzeichnet, dass** die durch jeden horizontalen Querschnitt der Flügel (4) dargestellte Wölbung zunimmt, wenn die Position in Höhe des Querschnitts selbst zunimmt.

**9.** Vertikalachsige Windturbine nach einem der vorhergehenden Ansprüche, **dadurch gekennzeichnet, dass** die Oberseite jedes Flügels (4) ein schräg abgeschnittenes Profil (8), d. h., nicht zu der Achse der Welle (1) gerundet, aufweist.

**10.** Vertikalachsige Windturbine nach einem der Ansprüche 1 bis 8, **dadurch gekennzeichnet, dass** die Oberseite jedes Flügels (4) ein ununterbrochenes Profil aufweist, d.h. eins, das zu der Achse der Welle (1) gerundet ist.

**Revendications**

1. Éolienne à axe vertical avec un arbre cylindrique (1), **caractérisée par** une tige (3) enroulée autour dudit arbre (1), une pluralité de bandes trapézoïdales (5) unies ensemble pour former deux, trois ou quatre ailes (4), une contre-tige (3') pour un ancrage final des bandes (5), et il est prévu en outre, soudée sur l'extérieur dudit arbre (1), pour chaque aile (4), une tige (3) enroulée en hélice autour de l'arbre (1) à un angle égal ou supérieur à 270° se développant uniformément sur toute la longueur de l'aile elle-même, dans laquelle chaque aile (4) est constituée de bandes alignées (5), qui se chevauchent entre elles en convergeant vers un unique centre de manière à constituer un bras de structure et en ce qu'elles sont alignées pour former deux profils, un profil intérieur et un profile extérieur, qui déterminent le forme de l'éolienne et des ses ailes (4), qui sont respectivement liés à l'arbre avec l'application d'une contre-tige (3'), rivetée et soudée sur tout le développement de chaque aile ; dans laquelle les bandes trapézoïdales (5) précitées qui composent l'aile sont disposées l'une à côté de l'autre et assemblées ensemble le long des volets de bord se chevauchant qui convergent vers un unique centre sur l'arbre (1) de manière à constituer des bras de renforcement de structure et ont en outre un profil intérieur qui reproduit la courbure de la tige qui est dans l'attente de l'engagement des bandes et un profil extérieur irrégulier et excentrique de manière à abaisser le centre de gravité de l'aile en élargissant la partie de fond de manière à améliorer une réponse au vent et aux contraintes.

2. Éolienne à axe vertical selon la revendication 1, **caractérisée en ce que** ledit arbre cylindrique (1) est tubulaire et est muni d'un contre-arbre de renfort (2) glissé à l'intérieur pour renforcer sa partie inférieure et **en ce que** les tiges (3) soudées en hélice le long du périmètre extérieur de l'arbre (1), sur toute la longueur de l'aile (4), fonctionnent comme renforcement structurel pour la partie supérieure et comme support pour les bandes (5) qui composent l'aile elle-même (4).

3. Éolienne à axe vertical selon l'une quelconque des revendications précédentes, **caractérisée en ce que** chaque tige (3) est constituée du même matériau que l'arbre et est incurvée suivant l'arc d'un cercle dérivant du rayon résultant de la formule suivante :

$$r = \left\{ hauteur\ aile \times \left( \frac{\pi}{2} \right) \right\} + diamètre\ arbre$$

par ailleurs, la tige est enroulée autour de l'arbre (1) à un angle supérieur à 270° se développant sur toute la hauteur de l'aile et est soudée à l'arbre, dans l'attente de l'engagement des bandes (5) qui composent l'aile (4) elle-même.

4. Éolienne à axe vertical selon l'une quelconque des revendications précédentes, **caractérisée en ce que** les bandes trapézoïdales (5) qui composent chaque aile (4) sont disposées l'une à côté de l'autre et assemblées par rivetage.

5. Éolienne à axe vertical selon l'une quelconque des revendications précédentes, **caractérisée en ce que** la contre-tige (3') conçue conformément à la tige (3), est boulonnée, soudée et finalement rivetée pour garantir un ancrage final solide des ailes (4) à l'arbre (1).

6. Éolienne à axe vertical selon l'une quelconque des revendications précédentes, **caractérisée en ce qu'**elle comprend en outre des goussets avant (6) et des goussets arrières (7) d'extension différente, disposés sur la bande inférieure, qui la raidissent au niveau de la fixation de l'aile (4) à un capuchon (9) pour protéger une enveloppe (10) de l'éolienne.

7. Éolienne à axe vertical selon l'une quelconque des revendications précédentes, **caractérisée en ce que** les ailes (4), vues en coupe transversale, ont une courbe en spirale et progressive qui, associée à la torsion hélicoïdale proportionnellement à la hauteur de l'arbre (1), crée un canal montant délimité par les ailes elles-mêmes qui s'enroule autour de l'arbre avec un rétrécissement progressif qui commence à partir de la base, où le canal est plus large, et atteint le sommet, où le canal est plus étroit.

8. Éolienne à axe vertical selon la revendication 7, **caractérisée en ce que** la courbure présentée par chaque section horizontale des ailes (4) augmente lorsque la position en hauteur de la section elle-même augmente.

9. Éolienne à axe vertical selon l'une quelconque des revendications précédentes, **caractérisée en ce que** le sommet de chaque aile (4) a un profil tronconique (8), c'est-à-dire non arrondi vers l'axe de l'arbre (1).

10. Éolienne à axe vertical selon l'une quelconque des revendications 1 à 8, **caractérisée en ce que** le sommet de chaque aile (4) a un profil continu, c'est-à-dire arrondi vers l'axe de l'arbre (1).

FIG. 1     FIG. 2

FIG. 3     FIG. 4

FIG.5

FIG. 5A

FIG. 8

CROSS SECTION B-B'

FIG. 9

CROSS SECTION A-A'

4

5

B        B'

A        A'

6        7

9

10

DETAIL 1

FIG.10

DETAIL 2

FIG 11

DETAIL 1

DETAIL 2

FIG. 6

FIG.7

8

4

DETAIL 1

DETAIL 2

**FIG. 6A**

B

B'

A

A'

5

6

7

9

10

**FIG. 7A**

CROSS SECTION B-B'

**FIG 8A**

**FIG 9A**

CROSS SECTION A-A'

DETAIL 1

**FIG 10A**

9

DETAIL 2

**FIG. 11A**

FIG. 12

FIG. 13

CONTINUOUS-PROFILE
TWO-BLADE ROTOR

FIG. 14

CONTINUOUS-PROFILE
THREE-BLADE ROTOR

FIG. 15

CONTINUOUS-PROFILE
FOUR-BLADE ROTOR

FIG. 16

**TRUNCATED-PROFILE
TWO-BLADE ROTOR**

# FIG. 14A

**TRUNCATED-PROFILE
THREE-BLADE ROTOR**

# FIG. 15A

**TRUNCATED-PROFILE
FOUR-BLADE ROTOR**

# FIG. 16A

FRONT

FIG. 17

BACK

**FOUR-BLADE ROTOR**

**THREE-BLADE ROTOR**

**TWO-BLADE ROTOR**

3 — 3'

FIG. 18

**REFERENCES CITED IN THE DESCRIPTION**

**Patent documents cited in the description**

- US 2011006543 A